# EUROPEAN PATENT SPECIFICATION

(11) **EP 3 396 981 B1**
(45) Date of publication and mention of the grant of the patent: **08.04.2020**
(21) Application number: 16888787.5
(22) Date of filing: 04.02.2016
(51) Int. Cl.: H04W 12/04, H04W 88/04, H04W 12/02, H04W 12/10

(54) **SECURITY PARAMETER TRANSMISSION METHOD AND RELATED DEVICE**
VERFAHREN ZUR ÜBERTRAGUNG VON SICHERHEITSPARAMETERN UND ZUGEHÖRIGE VORRICHTUNG
PROCÉDÉ DE TRANSMISSION DE PARAMÈTRES DE SÉCURITÉ ET DISPOSITIF ASSOCIÉ

(43) Date of publication of application: 31.10.2018
(73) Proprietor: Huawei Technologies Co., Ltd., Longgang District Shenzhen, Guangdong 518129 (CN)
(72) Inventor: MA, Jie, Shenzhen Guangdong 518129 (CN); LIN, Bo, Shenzhen Guangdong 518129 (CN)
(74) Representative: Gill Jennings & Every LLP
(86) International application number: PCT/CN2016/073566
(87) International publication number: WO 2017/132962

(56) References cited:
- CN-A- 101 873 642
- CN-A- 104 796 849
- CN-A- 104 869 526
- GB-A- 2 523 328
- US-A1- 2015 029 866

## Description

### TECHNICAL FIELD

The present invention relates to the field of communications technologies, and in particular, to a security parameter transmission method and a related device.

### BACKGROUND

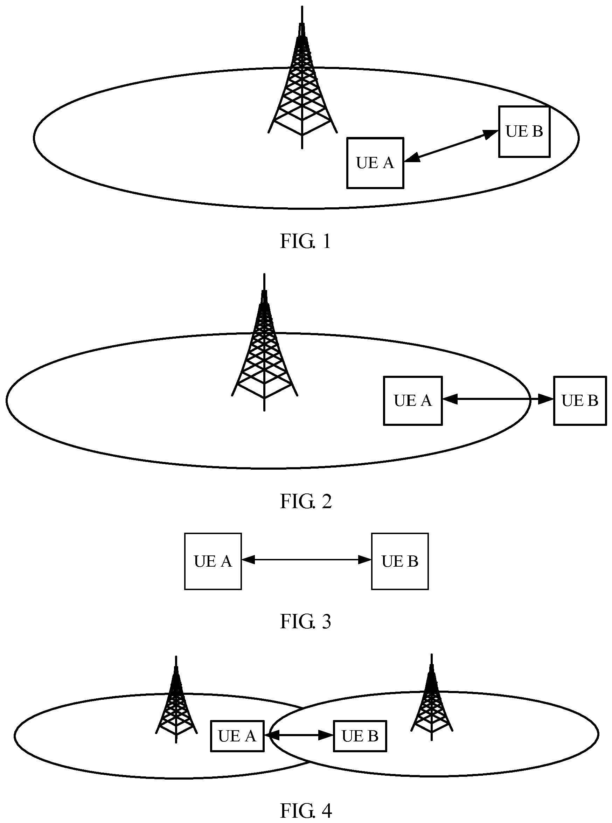

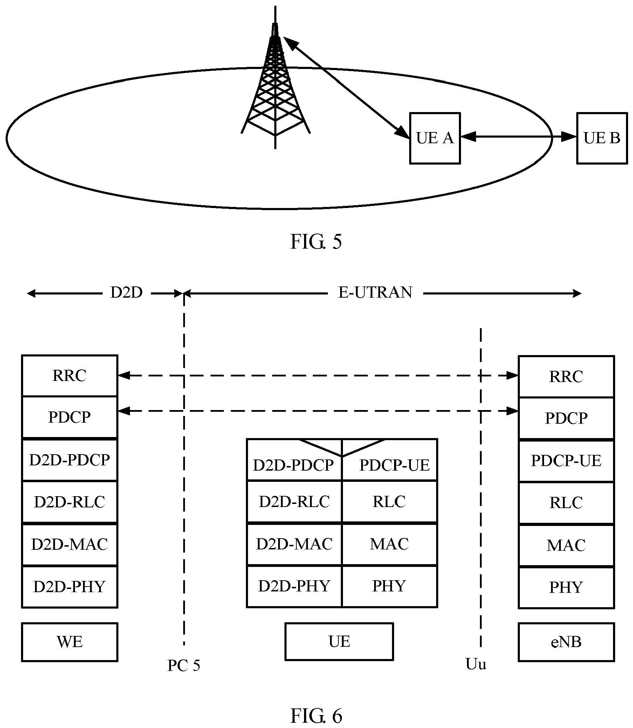

Device-to-device (Device-to-Device, D2D for short) communication means that devices directly communicate with each other, and deployment scenarios are shown in FIG. 1 to FIG. 4. Because a communication distance in a D2D communication mode is limited, and a terminal (User Equipment, UE for short) located outside coverage of a network cannot establish a connection to the network, a capability of communication between the terminal and the network is affected. When the terminal is located outside the coverage of the network but is relatively close to the coverage of the network, a terminal within the coverage of the network may be found and used as a relay to establish the connection to the network. As shown in FIG. 5, when UE B is located outside the coverage of the network, the UE B may establish a connection to the network by using UE A within the coverage of the network. The UE A providing a relay service is referred to as relay user equipment (Relay UE) or a relay terminal, and the UE B is referred to as remote user equipment (Remote UE) or a remote terminal, that is, user equipment or a terminal located outside the coverage of the network.

Currently, wearable equipment (Wearable Equipment, WE for short) mainly communicates with a smartphone by using a D2D protocol. Generally, the wearable equipment communicates with the smartphone by using a Bluetooth technology or a Wireless Fidelity (Wireless Fidelity, Wi-Fi for short) technology, and interaction information between the wearable equipment and the smartphone is invisible to the network. However, in many cases, the wearable equipment may be far away from the smartphone, and enable a direct cellular network connection mode, that is, the wearable equipment accesses a cellular network by using nearby relay UE providing a relay service.

How to improve security of communication between the wearable equipment in the direct cellular connection mode and the cellular network is a problem that needs to be resolved.

GB2523328 relates to a relay communication system. "3rd Generation Partnership Project; Technical Specification Group Radio Access Network; Evolved Universal Terrestrial Radio Access (EUTRA); Radio Resource Control (RRC); Protocol specification (Release 13)", 3GPP DRAFT; 36331-DOO, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 6 January 2016 relates to radio resource control protocol in LTE networks.

### SUMMARY

Embodiments of the present invention provide a security parameter transmission method and a related device, to resolve a transmission problem of a security parameter required for secure communication between a remote device and a cellular network.

Various aspects of the present disclosure have been defined in the independent claims. Further technical features of each of these aspects have been defined in the respective dependent claims.

After receiving, by using the first terminal device with a relay function, the radio resource connection management signaling that is used to request to obtain the security parameter, the network side device determines the identifier of the second terminal device that generates the radio resource connection management information, obtains the security parameter corresponding to the identifier of the second terminal device, and sends the obtained security parameter to the second terminal device by using the first terminal device, so that the network side device configures the security parameter for the second terminal device in a manner of forwarding signaling by using the first terminal device.

The network side device can distinguish signaling of the first terminal device from signaling of the second terminal device.

A dedicated radio bearer for forwarding signaling of the second terminal device can be set up between the first terminal device and the network side device.

The network side device can use the first terminal device as a relay to forward the security parameter to the second terminal device.

The first terminal device can distinguish whether signaling sent by the network side device belongs to the first terminal device or the signaling needs to be relayed to the second terminal device.

The first terminal device uses the relay function to forward the security parameter of the second terminal device from the network side device to the second terminal device.

The first terminal device can distinguish signaling whose destination is the first terminal device from signaling whose destination is the network side device, and directly forward signaling that is from the second terminal device and whose destination is the network side device.

### BRIEF DESCRIPTION OF DRAWINGS

FIG. 1 is a schematic diagram of a scenario of intra-cell coverage in D2D deployment;
FIG. 2 is a schematic diagram of a scenario of partial coverage in D2D deployment;
FIG. 3 is a schematic diagram of a scenario of no network coverage in D2D deployment;
FIG. 4 is a schematic diagram of a scenario of inter-cell coverage in D2D deployment;
FIG. 5 is a schematic diagram of establishing a connection to a network by UE outside coverage of the network;
FIG. 6 is a schematic architectural diagram of a control plane protocol stack according to an embodiment of the present invention;
FIG. 7 is a schematic architectural diagram of a user plane protocol stack according to an embodiment of the present invention;
FIG. 8 is a schematic flowchart of a security parameter transmission method according to an embodiment of the present invention;
FIG. 9 is a schematic structural diagram of a part of a MAC PDU of a D2D message according to an embodiment of the present invention;
FIG. 10 is a schematic diagram of a security parameter transmission process according to an embodiment of the present invention;
FIG. 11 is a schematic diagram of a process of setting up a dedicated radio bearer between a network side device and a first terminal device according to an embodiment of the present invention;
FIG. 12 is a schematic structural diagram of a network side device according to an embodiment of the present invention;
FIG. 13 is a schematic structural diagram of another network side device according to an embodiment of the present invention;
FIG. 14 is a schematic structural diagram of a terminal device according to an embodiment of the present invention;
FIG. 15 is a schematic structural diagram of another terminal device according to an embodiment of the present invention;
FIG. 16 is a schematic structural diagram of another terminal device according to an embodiment of the present invention;
FIG. 17 is a schematic structural diagram of another terminal device according to an embodiment of the present invention;
FIG. 18 is a schematic structural diagram of another network side device according to an embodiment of the present invention;
FIG. 19 is a schematic structural diagram of another network side device according to an embodiment of the present invention;
FIG. 20 is a schematic structural diagram of another terminal device according to an embodiment of the present invention; and
FIG. 21 is a schematic structural diagram of another terminal device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the following embodiments, a Long Term Evolution (Long Term Evolution, LTE) system is used as an example for description. It should be noted that the embodiments provided in the present invention are not limited to the LTE system, and may also be applied to another system.

In the following embodiments, a second terminal device is defined as a device that needs to use a first terminal device as a relay to communicate with a network side device, that is, a remote device. For example, the second terminal device is wearable equipment. The first terminal device has a relay function, and may also be referred to as a relay terminal. The second terminal device includes but is not limited to the wearable equipment. Specifically, the wearable equipment is a communications device worn on a human body, and is characterized by a small size and a low battery capacity. The wearable equipment may be directly connected to a cellular network, or may be connected to the cellular network by using nearly UE as a relay.

To resolve a security problem of communication between the second terminal device in a direct cellular connection mode and the cellular network, an architecture in which the second terminal device accesses the network is provided. In this architecture, the first terminal device forwards a message of the second terminal device to the network side device, and the first terminal device forwards a message of the network side device to the second terminal device. In a forwarding process, the first terminal device is confined only to forwarding a message between the second terminal device and the network side device, and cannot decrypt a message forwarded between the first terminal device and the network device.

Based on this architecture, a simplified radio resource control (Radio Resource Control, RRC) connection is established between the second terminal device and the network side device, and the network side device transmits a security parameter of the second terminal device to the second terminal device, to implement management on the second terminal device by the network side device, and implement security protection of the transmitted message by the network side device and the second terminal device.

When the security parameter is used to transmit data between the second terminal device and the network side device, encryption and/or decryption and/or integrity protection and/or integrity protection check are/is performed on the data.

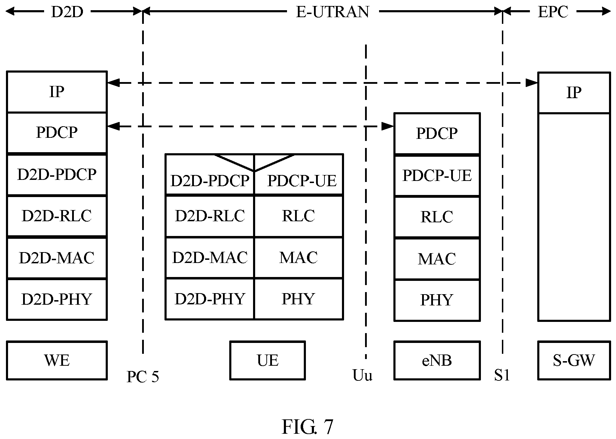

FIG. 6 is a schematic diagram of a control plane protocol stack between a second terminal device, a first terminal device, and a base station (eNB), and FIG. 7 is a schematic diagram of a user plane protocol stack between a second terminal device, a first terminal device, and a base station (eNB). Architectures of a control plane protocol stack and a user plane protocol stack used between the second terminal device and the eNB can enable the eNB to directly manage the second terminal device, so that the eNB can configure parameters of a control pane and a data plane of an RRC connection for the second terminal device, for example, configure security parameters of data and signaling transmitted from the second terminal device to the eNB.

Specifically, on a control plane, there is a peer-to-peer RRC layer and a Packet Data Convergence Protocol (Packet Data Convergence Protocol, PDCP) layer between the second terminal device and the eNB. The RRC layer is responsible for managing parameter configuration of an access link of the second terminal device and establishing a bearer of the second terminal device. The bearer of the second terminal device includes a radio bearer for accessing the eNB by the second terminal device and a bearer from the eNB to a core network.

On a user plane, for uplink data, the second terminal device processes an Internet Protocol (Internet Protocol, IP) data packet of an upper layer on a PDCP layer, and then the first terminal device forwards the processed data packet to the eNB. For downlink data, the eNB sends a data packet of the core network to the PDCP layer for processing, and then the first terminal device forwards the processed data packet to the second terminal device.

The control plane protocol stack and the user plane protocol stack are used. For a core network device such as a mobility management entity (Mobility Management Entity, MME), a serving gateway (Serving Gateway, SGW), or a packet data gateway (Packet Gateway, PGW), the second terminal device is directly connected to the eNB by using a UU interface, so that compatibility of the core network can be maintained. In addition, when the second terminal device is relatively far away from the first terminal device, if the second terminal device is directly connected to the eNB by using the UU interface, the eNB can still store a context of the second terminal device, so that a transmission capability of service data can be rapidly restored, a mobility processing procedure is simplified, and a delay is reduced. For the eNB, an RRC context of the second terminal device, especially a security parameter, is directly managed by the eNB, and only the second terminal device and a PDCP layer of the eNB participate in integrity protection, encryption, and decryption of signaling and data transmission, and therefore relay UE cannot decrypt signaling and data of the second terminal device. This ensures security of communicating by the second terminal device with the eNB by using any first terminal device.

The following embodiments provided in the present invention provide a solution to a transmission problem of a security parameter required for secure communication between a second terminal device and a cellular network.

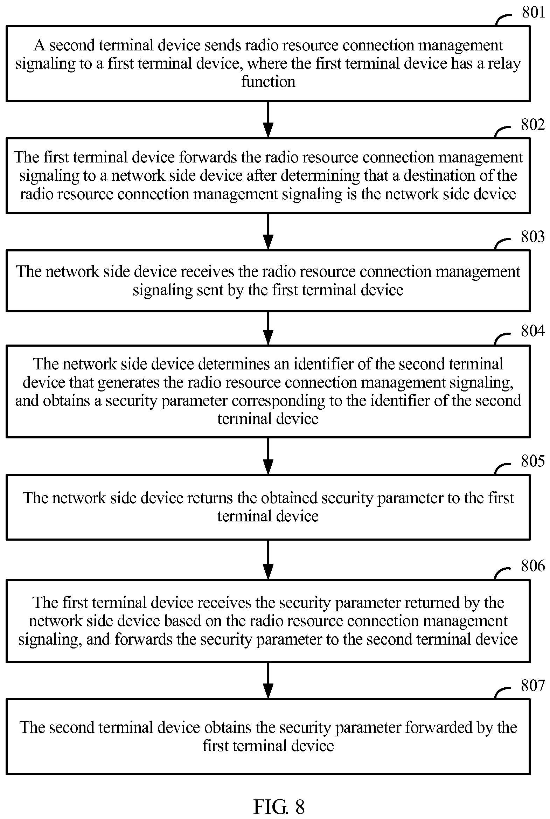

In an embodiment of the present invention, a security parameter transmission process is shown in FIG. 8, and is specifically as follows:
Step 801: A second terminal device sends radio resource connection management signaling to a first terminal device, where the first terminal device has a relay function.

The radio resource connection management signaling is used to request to obtain a security parameter.

The radio resource connection management information belongs to RRC signaling.

Optionally, the radio resource connection management signaling carries an identifier of the second terminal device.

In implementation, the second terminal device sends the radio resource connection management signaling to the first terminal device, and the first terminal device needs to determine that the radio resource connection management information is to be forwarded to a network side device. This specifically includes but is not limited to the following two implementations:

In a first implementation, the second terminal device sends the radio resource connection management signaling to the first terminal device by using a dedicated air interface resource. The dedicated air interface resource is used to forward signaling of the second terminal device to the network side device.

In implementation, the dedicated air interface resource may be a dedicated physical resource or a dedicated logical channel entity.

D2D communication is used as an example. An added feature of LTE-D2D may enable a data packet to be sent between the second terminal device and the first terminal device by using the dedicated air interface resource. Specifically, a dedicated bearer D2D-data radio bearer (Data Radio Bearer, DRB) is established between the second terminal device and the first terminal device, and the D2D-DRB is assigned to be specially used by the first terminal device to forward signaling or data of the second terminal device to the network side. That is, the first terminal device forwards, to a base station, the signaling or the data of the second terminal device received by using the D2D-DRB. When a sending destination of signaling of the network device is the first terminal device, the second terminal device sends the signaling by using the D2D-DRB.

In this implementation, the first terminal device does not need to parse a received data packet, and only needs to determine whether to receive the data packet by using the dedicated air interface resource, so as to determine whether the data packet needs to be forwarded to the network side device.

In a second implementation, the second terminal device sends the radio resource connection management signaling to the first terminal device by adding forwarding instruction information to the radio resource connection management signaling. The forwarding instruction information is used to instruct the first terminal device to forward signaling of the second terminal device to the network side device.

D2D communication is used as an example. When the second terminal device and the first terminal device communicate with each other by using an LTE-D2D technology in the 3GPP standard, because a data packet is sent in a broadcast mode in LTE-D2D, after receiving a data packet sent by the second terminal device through broadcasting, the first terminal device cannot determine whether the data packet needs to be forwarded to RRC signaling of the base station. Therefore, the second terminal device adds forwarding instruction information to a MAC PDU of a D2D message sent through broadcasting, to instruct the first terminal device receiving the D2D message to forward connection management information carried in the MAC PDU of the D2D message to the base station.

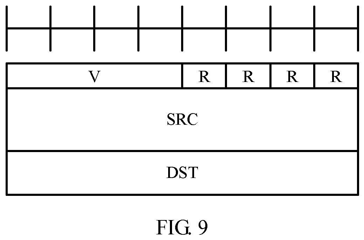

FIG. 9 is a schematic structural diagram of a part of a MAC PDU of a D2D message. In specific implementation, two R bits in oct1 may be used to indicate whether a data packet needs to be forwarded. It is assumed that in the two R bits, "00" indicates receiving and self-processing, "01" indicates receiving and forwarding to another D2D UE, and "10" indicates receiving and forwarding to a base station. If there are more processing types, more bits may be occupied to carry forwarding instruction information. For example, three or four R bits are occupied. A third R bit in the oct1 may be used to identify whether a data packet carried in a MAC PDU is signaling or common service data. A logical channel identifier (Logical channel identification, LCID) carried in the MAC PDU is an identifier of a logical channel group corresponding to a radio bearer that is on a UU interface of the first terminal device and that is used to forward a message of the second terminal device.

Step 802: The first terminal device forwards the radio resource connection management signaling to a network side device after determining that a destination of the radio resource connection management signaling is the network side device.

In implementation, corresponding to the two implementations in step 801, how the first terminal device determines that the destination of the radio resource connection management signaling of the second terminal device is the network side device includes but is not limited to the following two specific implementations:

In a first implementation, the destination of the radio resource connection management signaling is determined based on a dedicated air interface resource that is occupied to transmit the connection management information between the second terminal device and the first terminal device.

Specifically, if determining to receive, by using the dedicated air interface resource, the radio resource connection management signaling sent by the second terminal device, the first terminal device determines that the destination of the radio resource connection management signaling is the network side device. The dedicated air interface resource is used to instruct the first terminal device to forward signaling of the second terminal device to the network side device.

In a second implementation, the destination of the radio resource connection management signaling is determined based on forwarding instruction information carried in the radio resource connection management signaling.

Specifically, the first terminal device determines that the radio resource connection management signaling carries the forwarding instruction information, and determines, based on the forwarding instruction information, that the destination of the radio resource connection management signaling is the network side device. The forwarding instruction information is used to instruct to forward signaling of the second terminal device to the network side device.

In implementation, the first terminal device sends the radio resource connection management signaling to the network side device, and this includes but is not limited to the following two specific implementations:

In a first implementation, the first terminal device determines, based on a correspondence between an identifier of a second terminal device and an identifier of a dedicated radio bearer, an identifier of a dedicated radio bearer corresponding to the identifier of the second terminal device that generates the radio resource connection management signaling, and sends the radio resource connection management signaling to the network side device based on the identifier of the dedicated radio bearer. The dedicated radio bearer is a radio bearer between the network side device and the first terminal device.

Specifically, a dedicated radio bearer between the first terminal device and the network side device may be used to transmit signaling of one specific second terminal device, or may be used to transmit signaling of a plurality of second terminal devices.

If the dedicated radio bearer between the first terminal device and the network side device is specially used to carry signaling of one second terminal device, based on the correspondence between an identifier of a second terminal device and an identifier of a dedicated radio bearer, the first terminal device may uniquely determine a dedicated radio bearer based on an identifier of a second terminal device, and the dedicated radio bearer is specially used for the second terminal device; and the network side device may uniquely determine a second terminal device based on an identifier of a dedicated radio bearer.

If the dedicated radio bearer between the first terminal device and the network side device is used to carry signaling of a plurality of second terminal devices, the first terminal device may uniquely determine a dedicated radio bearer based on an identifier of a second terminal device. However, because the dedicated radio bearer may be used to transmit the signaling of the plurality of second terminal devices, the network side device cannot uniquely determine a second terminal device based on an identifier of a dedicated radio bearer, and further needs to perform a second implementation.

In specific implementation, for example, the network side device is a base station. The base station configures a dedicated signaling radio bearer (Signal Radio Bearer, SRB) between the first terminal device and the base station for the first terminal device, for example, an SRB 5 that is specially used by the first terminal device to transmit RRC signaling of the second terminal device.

A process of configuring the dedicated radio bearer between the network side device and the first terminal device is specifically as follows:

The network side device sends radio bearer configuration signaling to the first terminal device. The radio bearer configuration signaling includes at least the identifier of the dedicated radio bearer that is to be configured for transmitting the radio resource connection management signaling of the second terminal device. The first terminal device receives the radio bearer configuration signaling sent by the network side device, and returns radio bearer configuration complete signaling to the network side device after configuring, based on the radio bearer configuration signaling, the dedicated radio bearer for forwarding the radio resource connection management signaling of the second terminal device. The radio bearer configuration complete signaling is used to indicate that configuration of the dedicated radio bearer for transmitting the radio resource connection management signaling of the second terminal device is completed. The network side device receives the radio bearer configuration complete signaling returned by the first terminal device.

Specifically, the dedicated radio bearer is an SRB. Further, the radio bearer configuration signaling further includes one or a combination of the following information:
relay indication information (relay indicator), used to indicate that the to-be-configured dedicated radio bearer is used to relay data of the second terminal device;
a second terminal device identifier (remote UE ID) or a second terminal device identifier list (remote UE ID list), used to indicate that the dedicated radio bearer may be used to transmit data of a second terminal device indicated by the second terminal device identifier or the second terminal device identifier list;
a configuration parameter of a radio link control (Radio Link Control, RLC) layer, where the parameter needs to keep the same as an RLC parameter of a common terminal;
MAC configuration information (MAC-config; MAC, Medium Access Control, Medium Access Control), used to indicate a logical channel group (Logical channel group) of the dedicated radio bearer, for example, a logical channel identifier 5; and
a temporary cell radio network temporary identifier (Cell Radio Network Temporary Identifier, CRNTI) list, where when the second terminal device does not establish an RRC link to a network, and the second terminal device is linked with relay UE without obtaining an identifier allocated by the network, the relay UE allocates, based on the temporary CRNTI list, a temporary identifier to the second terminal device linked with the relay UE.

In a second implementation, the first terminal device sends the radio resource connection management signaling to the network side device after adding signaling source indication information to the radio resource connection management signaling. The signaling source indication information is used to indicate that the radio resource connection management signaling is generated by the second terminal device.

Specifically, when no dedicated radio bearer is configured between the first terminal device and the network side device, the network side device specifies the first terminal device to use an existing radio bearer to forward signaling of the second terminal device. Alternatively, the network side device configures only one dedicated radio bearer for the first terminal device, and the dedicated radio bearer is used by the first terminal device to forward signaling of the second terminal device to the network side device. In this case, the network side device cannot identify a source of signaling based only on a radio bearer carrying the signaling, and needs to add source indication information to the signaling. For example, if the network side device identifies that the source indication information in the signaling indicates the second terminal device, the network side device determines that the signaling is generated by the second terminal device; or if the network device identifies that the source indication information in the signaling indicates the first terminal device, the network device determines that the signaling is generated by the first terminal device.

Specifically, when the signaling source indication information indicates that the source is the second terminal device, the signaling source indication information may be the identifier of the second terminal device. The identifier of the second terminal device may be configured by the network side device, or may be notified after being negotiated and determined by the first terminal device and the network side device, or may be predefined.

Step 803: The network side device receives the radio resource connection management signaling sent by the first terminal device.

In implementation, after the network side device receives the radio resource connection management information of the second terminal device forwarded by the first terminal device, if the network side device finds that the second terminal device accesses the network side for the first time, the network side device needs to verify an identity of the second terminal device based on subscription information of the second terminal device, and then performs subsequent processing after verifying that the second terminal device is valid.

Step 804: The network side device determines an identifier of the second terminal device that generates the radio resource connection management signaling, and obtains a security parameter corresponding to the identifier of the second terminal device.

In implementation, the network side device determines the identifier of the second terminal device that generates the radio resource connection management signaling, and this includes but is not limited to the following two implementations:
In a first implementation, the network side device determines an identifier of a dedicated radio bearer for transmitting the radio resource connection management signaling, and determines, based on a correspondence between an identifier of a dedicated radio bearer and an identifier of a second terminal device, that an identifier of a second terminal device corresponding to the identifier of the dedicated radio bearer for transmitting the radio resource connection management signaling is the identifier of the second terminal device that generates the radio resource connection management signaling.

The dedicated radio bearer is a radio bearer between the network side device and the first terminal device.

In a second implementation, the network side device obtains signaling source indication information carried in the radio resource connection management signaling, determines, based on the signaling source indication information, that the radio resource connection management signaling is generated by the second terminal device, and determines the identifier of the second terminal device based on the radio resource connection management signaling. The signaling source indication information is used to indicate that the radio resource connection management signaling is generated by the second terminal device.

An implementation of the signaling source indication information is the identifier of the second terminal device. For example, the signaling source indication information is a CRNTI, a temporary mobile subscriber identity (Temporary Mobile Subscriber Identity, TMSI), or an Internet Protocol (Internet Protocol, IP) address of the second terminal device.

Step 805: The network side device returns the obtained security parameter to the first terminal device.

Specifically, the network side device generates a secure transmission mode request carrying the security parameter, and sends the secure transmission mode request to the first terminal device.

Step 806: The first terminal device receives the security parameter returned by the network side device based on the radio resource connection management signaling, and forwards the security parameter to the second terminal device.

Specifically, the first terminal device receives the secure transmission mode request that carries the security parameter and that is sent by the network side, and forwards the secure transmission mode request to the second terminal device.

In implementation, the first terminal device forwards the secure transmission mode request to the second terminal device, and this includes but is not limited to the following two specific implementations:
In a first implementation, a dedicated radio bearer used for transmitting the secure transmission mode request between the first terminal device and the network side device is determined, and determining is performed based on attribute information of the dedicated radio bearer.

Specifically, the first terminal device determines the identifier of the second terminal device included in an attribute of a dedicated radio bearer carrying the secure transmission mode request, and forwards the secure transmission mode request to the second terminal device based on the identifier of the second terminal device included in the attribute of the dedicated radio bearer.

In a second implementation, the secure transmission mode request further carries the identifier of the second terminal device, and the secure transmission mode request is forwarded based on the identifier of the second terminal device carried in the secure transmission mode request.

Specifically, the first terminal device forwards the secure transmission mode request to the second terminal device based on the identifier of the second terminal device carried in the secure transmission mode request.

Step 807: The second terminal device obtains the security parameter forwarded by the first terminal device.

In implementation, the network side device transmits the secure transmission mode request to the first terminal device, and this includes but is not limited to the following two specific implementations:

In a first implementation, the network side device sends the secure transmission mode request to the first terminal device by using a dedicated radio bearer. The dedicated radio bearer is a radio bearer between the network side device and the first terminal device.

Specifically, the attribute of the dedicated radio bearer carrying the secure transmission mode request includes the identifier of the second terminal device. The first terminal device forwards the secure transmission mode request to the second terminal device based on the identifier of the second terminal device included in the attribute of the dedicated radio bearer.

In a second implementation, the secure transmission mode request further carries the identifier of the second terminal device.

The first terminal device forwards the secure transmission mode request to the second terminal device based on the identifier of the second terminal device carried in the secure transmission mode request.

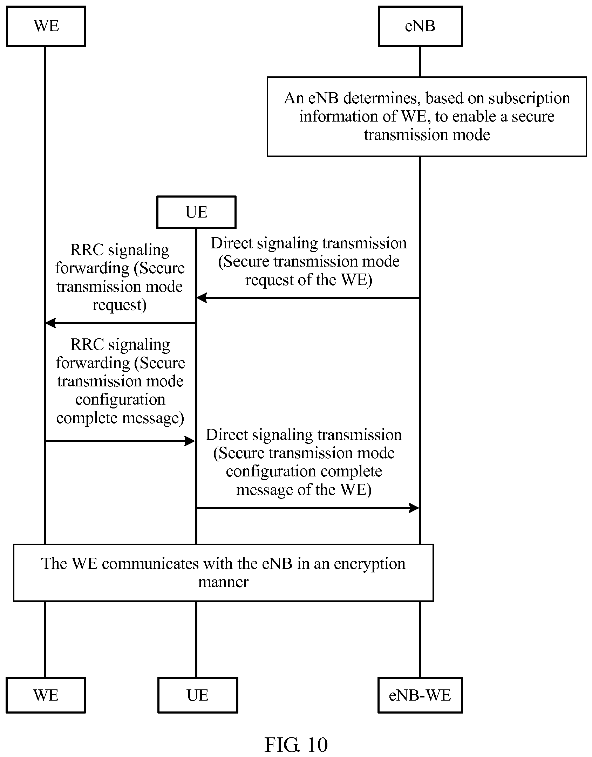

In a specific embodiment, FIG. 10 shows a security parameter transmission process:
It is assumed that the second terminal device is WE, and the second terminal device is UE. A base station determines, based on subscription information of wearable equipment, that the wearable equipment is valid. After determining that a secure transmission mode needs to be enabled to communicate with the wearable equipment, the base station sends a secure transmission mode request to a first terminal device, and instructs the first terminal device to directly transmit the secure transmission mode request to the second terminal device. The first terminal device forwards the secure transmission mode request to the wearable equipment. After performing security configuration based on a security parameter carried in the secure transmission mode request, the wearable equipment returns a secure transmission mode configuration complete message to the first terminal device, and instructs the first terminal device to directly transmit the secure transmission mode configuration complete message to the base station. The base station receives the secure transmission mode configuration complete message directly transmitted by the first terminal device, and determines, based on the secure transmission mode configuration complete message, that the second terminal device has enabled the secure transmission mode. In this case, the base station and the second terminal device successfully negotiate the security parameter with each other, and may communicate with each other in an encryption manner.

In this embodiment of the present invention, the first terminal device and the second terminal device can establish a wireless connection with each other by using a D2D protocol, a Bluetooth protocol, or a Wireless Fidelity Wi-Fi protocol.

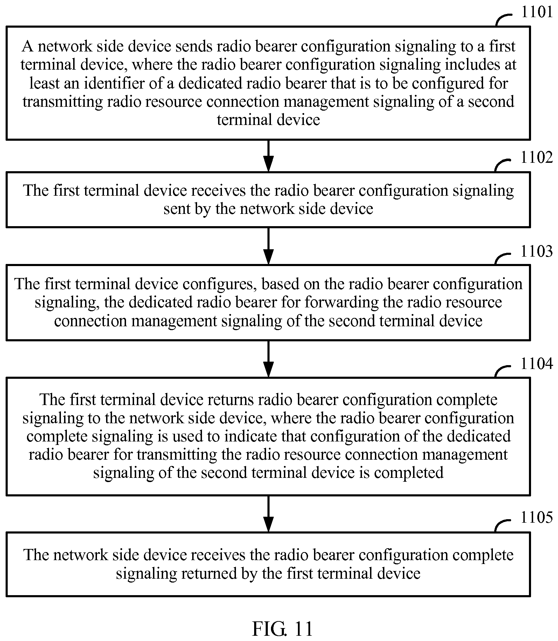

Based on a same invention concept, an embodiment of the present invention further provides a method for setting up a dedicated radio bearer for security parameter transmission. A process of setting up a dedicated radio bearer between a network side device and a first terminal device is shown in FIG. 11, and is specifically as follows:

Step 1101: A network side device sends radio bearer configuration signaling to a first terminal device, where the radio bearer configuration signaling includes at least an identifier of a dedicated radio bearer that is to be configured for transmitting radio resource connection management signaling of a second terminal device.

The radio bearer configuration signaling is used to configure a radio bearer between the network side device and the first terminal device.

In implementation, the network side device may configure a corresponding dedicated radio bearer for the second terminal device. Specifically, the dedicated radio bearer between the first terminal device and the network side device may be used to transmit signaling of a plurality of second terminal devices, or may be used to transmit signaling of one specific second terminal device.

Optionally, the radio bearer configuration signaling further includes one or a combination of the following information:
relay indication information (relay indicator), used to indicate that the configured dedicated radio bearer is used to relay data of the second terminal device, for example, relay signaling of the second terminal device;
a second terminal device identifier (remote UE ID) or a second terminal device identifier list (remote UE ID list), used to indicate that the dedicated radio bearer may be used to transmit data of a second terminal device indicated by the second terminal device identifier or the second terminal device identifier list;
a configuration parameter of a radio link control (Radio Link Control, RLC) layer, where the parameter needs to keep the same as an RLC parameter of a common terminal;
MAC configuration information (MAC-config; MAC, Medium Access Control, Medium Access Control), used to indicate a logical channel group (Logical channel group) of the dedicated radio bearer, for example, a logical channel identifier 5; and
a temporary cell radio network temporary identifier (Cell Radio Network Temporary Identifier, CRNTI) list, where when the second terminal device does not establish an RRC link to a network, and the second terminal device is linked with relay UE without obtaining an identifier allocated by the network, the relay UE allocates, based on the temporary CRNTI list, a temporary identifier to the second terminal device linked with the relay UE.

Step 1102: The first terminal device receives the radio bearer configuration signaling sent by the network side device.

Step 1103: The first terminal device configures, based on the radio bearer configuration signaling, the dedicated radio bearer for forwarding the radio resource connection management signaling of the second terminal device.

Step 1104: The first terminal device returns radio bearer configuration complete signaling to the network side device, where the radio bearer configuration complete signaling is used to indicate that configuration of the dedicated radio bearer for transmitting the radio resource connection management signaling of the second terminal device is completed.

Step 1105: The network side device receives the radio bearer configuration complete signaling returned by the first terminal device.

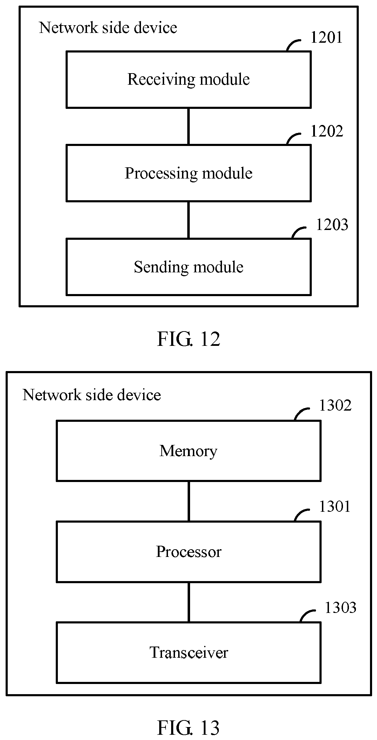

Based on a same invention concept, an embodiment of the present invention further provides a network side device. For specific implementation of the network side device, refer to some descriptions of the security parameter transmission method embodiment. No repeated description is provided. As shown in FIG. 12, the network side device mainly includes:
a receiving module 1201, configured to receive radio resource connection management signaling sent by a first terminal device, where the first terminal device has a relay function, and the radio resource connection management signaling is sent by a second terminal device to the first terminal device;
a processing module 1202, configured to: determine an identifier of the second terminal device that generates the radio resource connection management signaling received by the receiving module, and obtain a security parameter corresponding to the identifier of the second terminal device; and
a sending module 1203, configured to send the obtained security parameter to the second terminal device by using the first terminal device.

In a possible implementation, the processing module 1202 is specifically configured to:
determine an identifier of a dedicated radio bearer for transmitting the radio resource connection management signaling, and determine, based on a correspondence between an identifier of a dedicated radio bearer and an identifier of a second terminal device, that an identifier of a second terminal device corresponding to the identifier of the dedicated radio bearer for transmitting the radio resource connection management signaling is the identifier of the second terminal device that generates the radio resource connection management signaling, where the dedicated radio bearer is a radio bearer between the network side device and the first terminal device; or
obtain signaling source indication information carried in the radio resource connection management signaling, determine, based on the signaling source indication information, that the radio resource connection management signaling is generated by the second terminal device, and determine the identifier of the second terminal device based on the radio resource connection management signaling, where the signaling source indication information is used to indicate that the radio resource connection management signaling is generated by the second terminal device.

In a possible implementation, the sending module 1203 is further configured to:
send radio bearer configuration signaling to the first terminal device before the receiving module receives the radio resource connection management signaling sent by the first terminal device, where the radio bearer configuration signaling includes at least the identifier of the dedicated radio bearer that is to be configured for transmitting the radio resource connection management signaling of the second terminal device; and
the receiving module 1201 is further configured to:
   receive radio bearer configuration complete signaling returned by the first terminal device, where the radio bearer configuration complete signaling is used to indicate that configuration of the dedicated radio bearer for transmitting the radio resource connection management signaling of the second terminal device is completed.

In a possible implementation, the processing module 1202 is specifically configured to:
generate a secure transmission mode request, where the secure transmission mode request carries the security parameter; and
the sending module 1203 is specifically configured to:
   send the secure transmission mode request generated by the processing module to the first terminal device, so that the first terminal device forwards the secure transmission mode request to the second terminal device.

In a possible implementation, an attribute of a dedicated radio bearer carrying the secure transmission mode request includes the identifier of the second terminal device, the dedicated radio bearer is a radio bearer between the network side device and the first terminal device, and the first terminal device forwards the secure transmission mode request to the second terminal device based on the identifier of the second terminal device included in the attribute of the dedicated radio bearer; or
the secure transmission mode request further carries the identifier of the second terminal device, and the first terminal device forwards the secure transmission mode request to the second terminal device based on the identifier of the second terminal device carried in the secure transmission mode request.

Based on a same invention concept, an embodiment of the present invention further provides another network side device. For specific implementation of the network side device, refer to some descriptions of the security parameter transmission method embodiment. No repeated description is provided. As shown in FIG. 13, the network side device mainly includes a processor 1301, a memory 1302, and a transceiver 1303. The transceiver 1303 is configured to receive and send data under the control of the processor 1301, the memory 1302 stores a preset program, and the processor 1301 is configured to: read the program stored in the memory 1302, and perform the following processes based on the program:
receiving, by using the transceiver 1303, radio resource connection management signaling sent by a first terminal device, where the first terminal device has a relay function, and the radio resource connection management signaling is sent by a second terminal device to the first terminal device;
determining an identifier of the second terminal device that generates the radio resource connection management signaling received by the receiving module, and obtaining a security parameter corresponding to the identifier of the second terminal device; and
instructing the transceiver 1303 to send the obtained security parameter to the second terminal device by using the first terminal device.

In implementation, the processor 1301 is configured to complete a function of the processing module 1202 of the network side device described in the foregoing embodiment, and the transceiver 1303 is configured to complete, under the control of the processor 1301, functions of the receiving module 1201 and the sending module 1203 of the network side device described in the foregoing embodiment. Details are not described herein again.

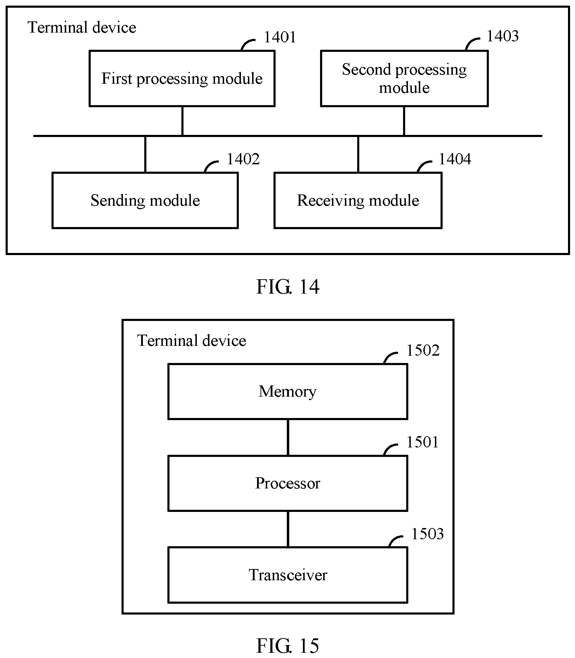

Based on a same invention concept, an embodiment of the present invention further provides a terminal device, and the terminal device is a first terminal device with a relay function. For specific implementation of the terminal device, refer to related descriptions of the first terminal device in the security parameter transmission method embodiment. No repeated description is provided. As shown in FIG. 14, the terminal device mainly includes:
a first processing module 1401, configured to: after it is determined that a destination of radio resource connection management signaling of a second terminal device is a network side device, instruct a sending module 1402 to send the radio resource connection management signaling to the network side device; and
a second processing module 1403, configured to: receive, by using a receiving module 1404, a security parameter returned by the network side device based on the radio resource connection management signaling, and instruct the sending module 1402 to forward the security parameter to the second terminal device, where the security parameter is obtained by the network side device based on an identifier of the second terminal device after the network side device determines the identifier of the second terminal device that generates the radio resource connection management signaling.

In a possible implementation, the first processing module 1401 is specifically configured to:
if determining that the receiving module 1404 receives, by using a dedicated air interface resource, the radio resource connection management signaling sent by the second terminal device, determine that the destination of the radio resource connection management signaling is the network side device, where the dedicated air interface resource is used to instruct the first terminal device to forward signaling of the second terminal device to the network side device; or
determine that the radio resource connection management signaling carries forwarding instruction information, and determine, based on the forwarding instruction information, that the destination of the radio resource connection management signaling is the network side device, where the forwarding instruction information is used to instruct to forward signaling of the second terminal device to the network side device.

In a possible implementation, the first processing module 1401 is specifically configured to:
determine, based on a correspondence between an identifier of a second terminal device and an identifier of a dedicated radio bearer, an identifier of a dedicated radio bearer corresponding to the identifier of the second terminal device that generates the radio resource connection management signaling, and instruct the sending module 1402 to send the radio resource connection management signaling to the network side device based on the identifier of the dedicated radio bearer, where the dedicated radio bearer is a radio bearer between the network side device and the first terminal device; or
after signaling source indication information is added to the radio resource connection management signaling, instruct the sending module 1402 to send the radio resource connection management signaling to the network side device, where the signaling source indication information is used to indicate that the radio resource connection management signaling is generated by the second terminal device.

In a possible implementation, the first processing module 1401 is further configured to:
before determining, based on the correspondence between an identifier of a second terminal device and an identifier of a dedicated radio bearer, the identifier of the dedicated radio bearer corresponding to the identifier of the second terminal device that generates the radio resource connection management signaling, receive, by using the receiving module 1404, radio bearer configuration signaling sent by the network side device, where the radio bearer configuration signaling includes at least the identifier of the dedicated radio bearer that is to be configured for transmitting the radio resource connection management signaling of the second terminal device; and
after the dedicated radio bearer for forwarding the radio resource connection management signaling of the second terminal device is configured based on the radio bearer configuration signaling, instruct the sending module 1402 to return radio bearer configuration complete signaling to the network side device, where the radio bearer configuration complete signaling is used to indicate that configuration of the dedicated radio bearer for transmitting the radio resource connection management signaling of the second terminal device is completed.

In a possible implementation, the second processing module 1403 is specifically configured to:
receive, by using the receiving module 1404, a secure transmission mode request returned by the network side device, where the secure transmission mode request carries the security parameter; and
instruct the sending module 1402 to forward the secure transmission mode request to the second terminal device.

In a possible implementation, the second processing module 1403 is specifically configured to:
determine the identifier of the second terminal device included in an attribute of a dedicated radio bearer carrying the secure transmission mode request, where the dedicated radio bearer is a radio bearer between the network side device and the first terminal device; and forward, by using the sending module 1402, the secure transmission mode request to the second terminal device based on the identifier of the second terminal device included in the attribute of the dedicated radio bearer; or
if the secure transmission mode request further carries the identifier of the second terminal device, forward, by using the sending module 1402, the secure transmission mode request to the second terminal device based on the identifier of the second terminal device carried in the secure transmission mode request.

Based on a same invention concept, an embodiment of the present invention further provides another terminal device, and the terminal device is a first terminal device with a relay function. For specific implementation of the terminal device, refer to related descriptions of the first terminal device in the security parameter transmission method embodiment. No repeated description is provided. As shown in FIG. 15, the terminal device mainly includes a processor 1501, a memory 1502, and a transceiver 1503. The transceiver 1503 is configured to receive and send data under the control of the processor 1501, the memory 1502 stores a preset program, and the processor 1501 is configured to: read the program stored in the memory 1502, and perform the following processes based on the program:
after it is determined that a destination of radio resource connection management signaling of a second terminal device is a network side device, instructing the transceiver 1503 to send the radio resource connection management signaling to the network side device; and
receiving, by using the transceiver 1503, a security parameter returned by the network side device based on the radio resource connection management signaling, and instructing the transceiver 1503 to forward the security parameter to the second terminal device, where the security parameter is obtained by the network side device based on an identifier of the second terminal device after the network side device determines the identifier of the second terminal device that generates the radio resource connection management signaling.

In implementation, the processor 1501 is configured to complete functions of the first processing module 1401 and the second processing module 1403 of the first terminal device described in the foregoing embodiment, and the transceiver 1503 is configured to complete, under the control of the processor 1501, functions of the receiving module 1404 and the sending module 1402 of the first terminal device described in the foregoing embodiment. Details are not described herein again.

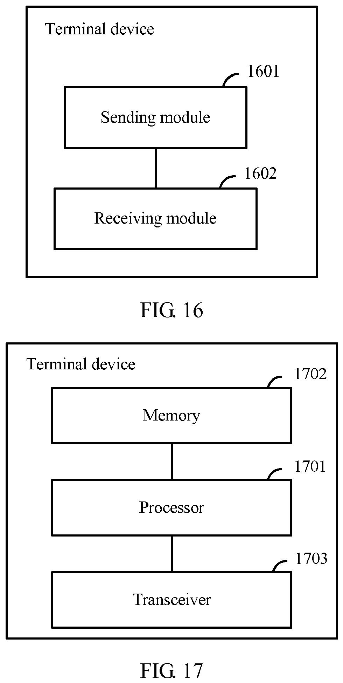

Based on a same invention concept, an embodiment of the present invention further provides another terminal device, and the terminal device is a second terminal device, that is, a remote device. For specific implementation of the terminal device, refer to related descriptions of the second terminal device in the security parameter transmission method embodiment. No repeated description is provided. As shown in FIG. 16, the terminal device mainly includes:
a sending module 1601, configured to send radio resource connection management signaling to a first terminal device, so that the first terminal device forwards the radio resource connection management signaling to a network side device after determining that a destination of the radio resource connection management signaling is the network side device, where the first terminal device has a relay function; and
a receiving module 1602, configured to receive a security parameter returned by the network side device by using the first terminal device, where the security parameter is obtained by the network side device based on an identifier of the terminal device after the network side device determines the identifier of the terminal device that generates the radio resource connection management signaling.

In a possible implementation, the sending module 1601 is specifically configured to:
send the radio resource connection management signaling to the first terminal device by using a dedicated air interface resource, where the dedicated air interface resource is used to instruct to forward signaling of the terminal device to the network side device; or
send the radio resource connection management signaling to the first terminal device after forwarding instruction information is added to the radio resource connection management signaling, where the forwarding instruction information is used to instruct to forward signaling of the terminal device to the network side device.

Based on a same invention concept, an embodiment of the present invention further provides another terminal device, and the terminal device is a second terminal device, that is, a remoter device. For specific implementation of the terminal device, refer to related descriptions of the second terminal device in the security parameter transmission method embodiment. No repeated description is provided. As shown in FIG. 17, the terminal device mainly includes a processor 1701, a memory 1702, and a transceiver 1703. The transceiver 1703 is configured to receive and send data under the control of the processor 1701, the memory 1702 stores a preset program, and the processor 1701 is configured to: read the program stored in the memory 1702, and perform the following processes based on the program:
sending radio resource connection management signaling to a first terminal device by using the transceiver 1703, so that the first terminal device forwards the radio resource connection management signaling to a network side device after determining that a destination of the radio resource connection management signaling is the network side device, where the first terminal device has a relay function; and
receiving, by using the transceiver 1703 a security parameter returned by the network side device by using the first terminal device, where the security parameter is obtained by the network side device based on an identifier of the terminal device after the network side device determines the identifier of the terminal device that generates the radio resource connection management signaling.

In a possible implementation, the processor 1701 instructs the transceiver 1703 to send the radio resource connection management signaling to the first terminal device by using a dedicated air interface resource, where the dedicated air interface resource is used to instruct to forward signaling of the terminal device to the network side device; or
after forwarding instruction information is added to the radio resource connection management signaling, the processor 1701 instructs the transceiver 1703 to send the radio resource connection management signaling to the first terminal device, where the forwarding instruction information is used to instruct to forward signaling of the terminal device to the network side device.

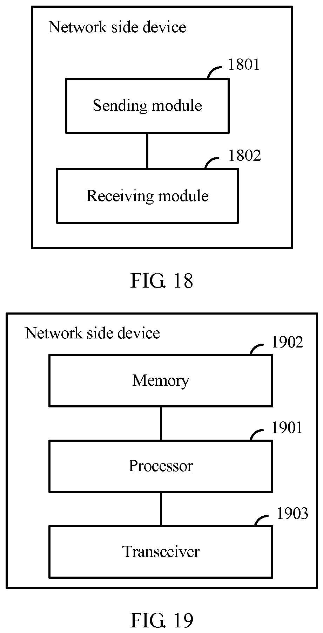

Based on a same invention concept, an embodiment of the present invention further provides another network side device. For specific implementation of the network side device, refer to some descriptions of the dedicated radio bearer setup method embodiment. No repeated description is provided. As shown in FIG. 18, the network side device mainly includes:
a sending module 1801, configured to send radio bearer configuration signaling to a first terminal device, where the radio bearer configuration signaling includes at least an identifier of a dedicated radio bearer that is to be configured for transmitting radio resource connection management signaling of a second terminal device, the dedicated radio bearer is a radio bearer between the network side device and the first terminal device, and the first terminal device has a relay function; and
a receiving module 1802, configured to receive radio bearer configuration complete signaling returned by the first terminal device, where the radio bearer configuration complete signaling is used to indicate that configuration of the dedicated radio bearer for transmitting the radio resource connection management signaling of the second terminal device is completed.

Specifically, for information carried in the radio bearer configuration signaling, refer to some descriptions of the method embodiment. Details are not described herein again.

Based on a same invention concept, an embodiment of the present invention further provides another network side device. For specific implementation of the network side device, refer to some descriptions of the dedicated radio bearer setup method embodiment. No repeated description is provided. As shown in FIG. 19, the network side device mainly includes a processor 1901, a memory 1902, and a transceiver 1903. The transceiver 1903 is configured to receive and send data under the control of the processor 1901, the memory 1902 stores a preset program, and the processor 1901 is configured to: read the program stored in the memory 1902, and perform the following processes based on the program:
instructing the transceiver 1903 to send radio bearer configuration signaling to a first terminal device, where the radio bearer configuration signaling includes at least an identifier of a dedicated radio bearer that is to be configured for transmitting radio resource connection management signaling of a second terminal device, the dedicated radio bearer is a radio bearer between the network side device and the first terminal device, and the first terminal device has a relay function; and
instructing the transceiver 1903 to receive radio bearer configuration complete signaling returned by the first terminal device, where the radio bearer configuration complete signaling is used to indicate that configuration of the dedicated radio bearer for transmitting the radio resource connection management signaling of the second terminal device is completed.

Specifically, for information carried in the radio bearer configuration signaling, refer to some descriptions of the method embodiment. Details are not described herein again.

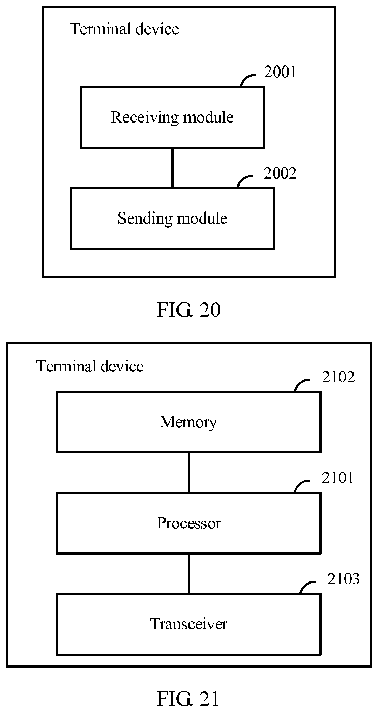

Based on a same invention concept, an embodiment of the present invention further provides another terminal device, and the terminal device is a first terminal device with a relay function. For specific implementation of the terminal device, refer to some descriptions of the dedicated radio bearer setup method embodiment. No repeated description is provided. As shown in FIG. 20, the terminal device mainly includes:
a receiving module 2001, configured to receive radio bearer configuration signaling sent by a network side device, where the radio bearer configuration signaling includes at least an identifier of a dedicated radio bearer that is to be configured for transmitting radio resource connection management signaling of a second terminal device, and the dedicated radio bearer is a radio bearer between the network side device and the first terminal device; and
a sending module 2002, configured to return radio bearer configuration complete signaling to the network side device after the dedicated radio bearer for forwarding the radio resource connection management signaling of the second terminal device is configured based on the radio bearer configuration signaling, where the radio bearer configuration complete signaling is used to indicate that configuration of the dedicated radio bearer for transmitting the radio resource connection management signaling of the second terminal device is completed.

Specifically, for information carried in the radio bearer configuration signaling, refer to some descriptions of the method embodiment. Details are not described herein again.

Based on a same invention concept, an embodiment of the present invention further provides another terminal device, and the terminal device is a first terminal device with a relay function. For specific implementation of the terminal device, refer to some descriptions of the dedicated radio bearer setup method embodiment. No repeated description is provided. As shown in FIG. 21, the terminal device mainly includes a processor 2101, a memory 2102, and a transceiver 2103. The transceiver 2103 is configured to receive and send data under the control of the processor 2101, the memory 2102 stores a preset program, and the processor 2101 is configured to: read the program stored in the memory 2102, and perform the following processes based on the program:
receiving, by using the transceiver 2103, radio bearer configuration signaling sent by a network side device, where the radio bearer configuration signaling includes at least an identifier of a dedicated radio bearer that is to be configured for transmitting radio resource connection management signaling of a second terminal device, and the dedicated radio bearer is a radio bearer between the network side device and the first terminal device; and
after the dedicated radio bearer for forwarding the radio resource connection management signaling of the second terminal device is configured based on the radio bearer configuration signaling, instructing the transceiver 2103 to return radio bearer configuration complete signaling to the network side device, where the radio bearer configuration complete signaling is used to indicate that configuration of the dedicated radio bearer for transmitting the radio resource connection management signaling of the second terminal device is completed.

Specifically, for information carried in the radio bearer configuration signaling, refer to some descriptions of the method embodiment. Details are not described herein again.

In FIG. 13, FIG. 15, FIG. 17, FIG. 19, and FIG. 21, the processor, the memory, and the transceiver are connected to each other by using a bus. A bus architecture may include any quantity of interconnected buses and bridges, and specifically links together various circuits of one or more processors represented by the processor and a memory represented by the memory. The bus architecture may further link together various other circuits such as a peripheral device, a voltage regulator, and a power management circuit, and this is well known in the art. Therefore, no further description is provided in this specification. A bus interface provides an interface. The transceiver may be a plurality of components, that is, the transceiver includes a transmitter and a transceiver, and provides a unit configured to communicate with various other apparatuses on a transmission medium. The processor is responsible for bus architecture management and general processing. The memory may store data used when the processor performs an operation.

Based on the foregoing technical solutions, in the embodiments of the present invention, after receiving, by using the first terminal device with a relay function, the radio resource connection management signaling that is used to request to obtain the security parameter, the network side device determines the identifier of the second terminal device that generates the radio resource connection management information, obtains the security parameter corresponding to the identifier of the second terminal device, and sends the obtained security parameter to the second terminal device by using the first terminal device, so that the network side device configures the security parameter for the second terminal device in a manner of forwarding signaling by using the first terminal device.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the scope of the present invention. The present invention is intended to cover these modifications and variations provided that they fall within the scope of protection defined by the following claims.

## Claims

1. A security parameter transmission method, comprising:
receiving (803), by a network side device, radio resource connection management signaling sent by a first terminal device, wherein the first terminal device has a relay function, and the radio resource connection management signaling is sent by a second terminal device to the first terminal device;
determining (804), by the network side device, an identifier of the second terminal device that generates the radio resource connection management signaling, and obtaining a security parameter corresponding to the identifier of the second terminal device; and
sending (805), by the network side device, the obtained security parameter to the second terminal device by using the first terminal device;
wherein the sending, by the network side device, the obtained security parameter to the second terminal device by using the first terminal device comprises:
generating, by the network side device, a secure transmission mode request, wherein the secure transmission mode request carries the security parameter; and
sending, by the network side device, the secure transmission mode request to the first terminal device, so that the first terminal device forwards the secure transmission mode request to the second terminal device;
the method being **characterized in that** the secure transmission mode request further carries the identifier of the second terminal device, so that the first terminal device forwards the secure transmission mode request to the second terminal device based on the identifier of the second terminal device carried in the secure transmission mode request.

2. The method according to claim 1, wherein the radio resource connection management signaling carries the identifier of the second terminal device.

3. The method according to claim 1, wherein the determining, by the network side device, an identifier of the second terminal device that generates the radio resource connection management signaling comprises:
determining, by the network side device, an identifier of a dedicated radio bearer for transmitting the radio resource connection management signaling, and determining, based on a correspondence between an identifier of a dedicated radio bearer and an identifier of a second terminal device, that an identifier of a second terminal device corresponding to the identifier of the dedicated radio bearer for transmitting the radio resource connection management signaling is the identifier of the second terminal device that generates the radio resource connection management signaling, wherein the dedicated radio bearer is a radio bearer between the network side device and the first terminal device; or
obtaining, by the network side device, signaling source indication information carried in the radio resource connection management signaling, determining, based on the signaling source indication information, that the radio resource connection management signaling is generated by the second terminal device, and determining the identifier of the second terminal device based on the radio resource connection management signaling, wherein the signaling source indication information is used to indicate that the radio resource connection management signaling is generated by the second terminal device.

4. The method according to claim 3, wherein before the receiving, by a network side device, radio resource connection management signaling sent by a first terminal device, the method further comprises:
sending, by the network side device, radio bearer configuration signaling to the first terminal device, wherein the radio bearer configuration signaling comprises at least the identifier of the dedicated radio bearer that is to be configured for transmitting the radio resource connection management signaling of the second terminal device; and
receiving, by the network side device, radio bearer configuration complete signaling returned by the first terminal device, wherein the radio bearer configuration complete signaling is used to indicate that configuration of the dedicated radio bearer for transmitting the radio resource connection management signaling of the second terminal device is completed.

5. A security parameter transmission method, comprising:
determining (802), by a first terminal device, that a destination of radio resource connection management signaling of a second terminal device is a network side device, and then sending the radio resource connection management signaling to the network side device, wherein the first terminal device has a relay function; and
receiving (806), by the first terminal device, a security parameter returned by the network side device based on the radio resource connection management signaling, and forwarding the security parameter to the second terminal device, wherein the security parameter is obtained based on an identifier of the second terminal device that generates the radio resource connection management signaling.
the receiving, by the first terminal device, a security parameter returned by the network side device based on the radio resource connection management signaling, and forwarding the security parameter to the second terminal device includes:
receiving, by the first terminal device, a secure transmission mode request returned by the network side device, where the secure transmission mode request carries the security parameter; and
forwarding, by the first terminal device, the secure transmission mode request to the second terminal device;
the method being **characterized in that** the forwarding, by the first terminal device, the secure transmission mode request to the second terminal device includes:
if the secure transmission mode request further carries the identifier of the second terminal device, forwarding, by the first terminal device, the secure transmission mode request to the second terminal device based on the identifier of the second terminal device carried in the secure transmission mode request.

6. The method according to claim 5, wherein the radio resource connection management signaling carries the identifier of the second terminal device.

7. The method according to claim 5 or 6, wherein the determining, by a first terminal device, that a destination of radio resource connection management signaling of a second terminal device is a network side device comprises:
if determining to receive, by using a dedicated air interface resource, the radio resource connection management signaling sent by the second terminal device, determining, by the first terminal device, that the destination of the radio resource connection management signaling is the network side device, wherein the dedicated air interface resource is used to instruct the first terminal device to forward signaling of the second terminal device to the network side device; or
determining, by the first terminal device, that the radio resource connection management signaling carries forwarding instruction information, and determining, based on the forwarding instruction information, that the destination of the radio resource connection management signaling is the network side device, wherein the forwarding instruction information is used to instruct to forward signaling of the second terminal device to the network side device.

8. The method according to any one of claims 5 to 7, wherein the sending, by a first terminal device, the radio resource connection management signaling to the network side device comprises:
determining, by the first terminal device based on a correspondence between an identifier of a second terminal device and an identifier of a dedicated radio bearer, an identifier of a dedicated radio bearer corresponding to the identifier of the second terminal device that generates the radio resource connection management signaling, and sending the radio resource connection management signaling to the network side device based on the identifier of the dedicated radio bearer, wherein the dedicated radio bearer is a radio bearer between the network side device and the first terminal device; or
sending, by the first terminal device, the radio resource connection management signaling to the network side device after adding signaling source indication information to the radio resource connection management signaling, wherein the signaling source indication information is used to indicate that the radio resource connection management signaling is generated by the second terminal device.

9. A network side device, comprising:
a receiving module (1201), configured to receive radio resource connection management signaling sent by a first terminal device, wherein the first terminal device has a relay function, and the radio resource connection management signaling is sent by a second terminal device to the first terminal device;
a processing module (1202), configured to: determine an identifier of the second terminal device that generates the radio resource connection management signaling received by the receiving module, and obtain a security parameter corresponding to the identifier of the second terminal device; and
a sending module (1203), configured to send the obtained security parameter to the second terminal device by using the first terminal device;
wherein, the processing module is specifically configured to:
generate a secure transmission mode request, where the secure transmission mode request carries the security parameter; and
the sending module is specifically configured to:
send the secure transmission mode request generated by the processing module to the first terminal device, so that the first terminal device forwards the secure transmission mode request to the second terminal device;
the network side device being **characterized in that** the secure transmission mode request further carries the identifier of the second terminal device, so that the first terminal device forwards the secure transmission mode request to the second terminal device based on the identifier of the second terminal device carried in the secure transmission mode request.

10. The network side device according to claim 9, wherein the radio resource connection management signaling carries the identifier of the second terminal device.

11. The network side device according to claim 9, wherein the processing module is specifically configured to:
determine an identifier of a dedicated radio bearer for transmitting the radio resource connection management signaling, and determine, based on a correspondence between an identifier of a dedicated radio bearer and an identifier of a second terminal device, that an identifier of a second terminal device corresponding to the identifier of the dedicated radio bearer for transmitting the radio resource connection management signaling is the identifier of the second terminal device that generates the radio resource connection management signaling, wherein the dedicated radio bearer is a radio bearer between the network side device and the first terminal device; or
obtain signaling source indication information carried in the radio resource connection management signaling, determine, based on the signaling source indication information, that the radio resource connection management signaling is generated by the second terminal device, and determine the identifier of the second terminal device based on the radio resource connection management signaling, wherein the signaling source indication information is used to indicate that the radio resource connection management signaling is generated by the second terminal device.

12. A terminal device, wherein the terminal device is a first terminal device with a relay function and comprises:
a first processing module (1401), configured to: after it is determined that a destination of radio resource connection management signaling of a second terminal device is a network side device, instruct a sending module to send the radio resource connection management signaling to the network side device; and
a second processing module (1403), configured to: receive, by using a receiving module, a security parameter returned by the network side device based on the radio resource connection management signaling, and instruct the sending module to forward the security parameter to the second terminal device, wherein the security parameter is obtained based on an identifier of the second terminal device that generates the radio resource connection management signaling;
the second processing module is specifically configured to:
receive, by using the receiving module, a secure transmission mode request returned by the network side device, where the secure transmission mode request carries the security parameter; and
instruct the sending module to forward the secure transmission mode request to the second terminal device;
the terminal device being **characterized in that** the second processing module is specifically configured to: if the secure transmission mode request further carries the identifier of the second terminal device, forward, by using the sending module, the secure transmission mode request to the second terminal device based on the identifier of the second terminal device carried in the secure transmission mode request.

13. The terminal device according to claim 12, wherein the radio resource connection management signaling carries the identifier of the second terminal device.

14. The terminal device according to claim 12 or 13, wherein the first processing module is specifically configured to:
if determining that the receiving module receives, by using a dedicated air interface resource, the radio resource connection management signaling sent by the second terminal device, determine that the destination of the radio resource connection management signaling is the network side device, wherein the dedicated air interface resource is used to instruct the first terminal device to forward signaling of the second terminal device to the network side device; or
determine that the radio resource connection management signaling carries forwarding instruction information, and determine, based on the forwarding instruction information, that the destination of the radio resource connection management signaling is the network side device, wherein the forwarding instruction information is used to instruct to forward signaling of the second terminal device to the network side device.

## Patentansprüche

1. Verfahren zur Übertragung von Sicherheitsparametern, das Folgendes aufweist:
Empfangen (803) einer von einem ersten Endgerät gesendeten Funkressourcen-Verbindungsverwaltungssignalisierung durch eine netzwerkseitige Vorrichtung, wobei das erste Endgerät eine Relaisfunktion hat und die Funkressourcen-Verbindungsverwaltungssignalisierung von einem zweiten Endgerät an das erste Endgerät gesendet wird;
Bestimmen (804) einer Kennung des zweiten Endgeräts, das die Funkressourcen-Verbindungsverwaltungssignalisierung erzeugt, durch die netzwerkseitige Vorrichtung und Erhalten eines Sicherheitsparameters, der der Kennung des zweiten Endgeräts entspricht; und
Senden (805) des erhaltenen Sicherheitsparameters durch die netzwerkseitige Vorrichtung an das zweite Endgerät unter Verwendung des ersten Endgeräts;
wobei das Senden des erhaltenen Sicherheitsparameters durch die netzwerkseitige Vorrichtung an das zweite Endgerät unter Verwendung des ersten Endgeräts Folgendes aufweist:
Erzeugen einer Anforderung für einen sicheren Übertragungsmodus durch die netzwerkseitige Vorrichtung, wobei die Anforderung für einen sicheren Übertragungsmodus den Sicherheitsparameter enthält; und
Senden der Anforderung für einen sicheren Übertragungsmodus durch die netzwerkseitige Vorrichtung an das erste Endgerät, damit das erste Endgerät die Anforderung für einen sicheren Übertragungsmodus an das zweite Endgerät weiterleitet;
wobei das Verfahren **dadurch gekennzeichnet ist, dass**
die Anforderung für einen sicheren Übertragungsmodus darüber hinaus die Kennung des zweiten Endgeräts enthält, damit
das erste Endgerät die Anforderung für einen sicheren Übertragungsmodus basierend auf der Kennung des zweiten Endgeräts, die in der Anforderung für einen sicheren Übertragungsmodus enthalten ist, an das zweite Endgerät weiterleitet.

2. Verfahren nach Anspruch 1, wobei die Funkressourcen-Verbindungsverwaltungssignalisierung die Kennung des zweiten Endgeräts enthält.

3. Verfahren nach Anspruch 1, wobei das Bestimmen durch die netzwerkseitige Vorrichtung einer Kennung des zweiten Endgeräts, das die Funkressourcen-Verbindungsverwaltungssignalisierung erzeugt, Folgendes aufweist:
Bestimmen einer Kennung eines dedizierten Funkträgers zum Übertragen der Funkressourcen-Verbindungsverwaltungssignalisierung durch die netzwerkseitige Vorrichtung und Bestimmen, basierend auf einer Entsprechung zwischen einer Kennung eines dedizierten Funkträgers und einer Kennung eines zweiten Endgeräts, dass eine Kennung eines zweiten Endgeräts, die der Kennung des dedizierten Funkträgers zum Übertragen der Funkressourcen-Verbindungsverwaltungssignalisierung entspricht, die Kennung des zweiten Endgeräts ist, das die Funkressourcen-Verbindungsverwaltungssignalisierung erzeugt, wobei der dedizierte Funkträger ein Funkträger zwischen der netzwerkseitigen Vorrichtung und dem ersten Endgerät ist; oder
Erhalten von Signalisierungsquellen-Anzeigeinformationen, die in der Funkressourcen-Verbindungsverwaltungssignalisierung enthalten sind, durch die netzwerkseitige Vorrichtung, Bestimmen, basierend auf den Signalisierungsquellen-Anzeigeinformationen, dass die Funkressourcen-Verbindungsverwaltungssignalisierung durch das zweite Endgerät erzeugt wird, und Bestimmen der Kennung des zweiten Endgeräts basierend auf der Funkressourcen-Verbindungsverwaltungssignalisierung, wobei die Signalisierungsquellen-Anzeigeinformationen verwendet werden, um anzuzeigen, dass die Funkressourcen-Verbindungsverwaltungssignalisierung durch das zweite Endgerät erzeugt wird.

4. Verfahren nach Anspruch 3, wobei vor dem Empfangen der von einem ersten Endgerät gesendeten Funkressourcen-Verbindungsverwaltungssignalisierung durch eine netzwerkseitige Vorrichtung das Verfahren darüber hinaus Folgendes aufweist:
Senden einer Funkträgerkonfigurations-Signalisierung durch die netzwerkseitige Vorrichtung an das erste Endgerät, wobei die Funkträgerkonfigurations-Signalisierung mindestens die Kennung des dedizierten Funkträgers aufweist, der für das Übertragen der Funkressourcen-Verbindungsverwaltungssignalisierung des zweiten Endgeräts konfiguriert werden soll; und
Empfangen einer Funkträgerkonfiguration-abgeschlossen-Signalisierung, die von dem ersten Endgerät zurückgegeben wird, durch die netzwerkseitige Vorrichtung, wobei die Funkträgerkonfiguration-abgeschlossen-Signalisierung verwendet wird, um anzuzeigen, dass die Konfiguration des dedizierten Funkträgers für das Übertragen der Funkressourcen-Verbindungsverwaltungssignalisierung des zweiten Endgeräts abgeschlossen ist.

5. Verfahren zur Übertragung von Sicherheitsparametern, das Folgendes aufweist:
Bestimmen (802) durch ein erstes Endgerät, dass ein Ziel der Funkressourcen-Verbindungsverwaltungssignalisierung eines zweiten Endgeräts eine netzwerkseitige Vorrichtung ist, und anschließendes Senden der Funkressourcen-Verbindungsverwaltungssignalisierung an die netzwerkseitige Vorrichtung, wobei das erste Endgerät eine Relaisfunktion hat; und
Empfangen (806) eines von der netzwerkseitigen Vorrichtung zurückgegebenen Sicherheitsparameters durch das erste Endgerät basierend auf der Funkressourcen-Verbindungsverwaltungssignalisierung und Weiterleiten des Sicherheitsparameters an das zweite Endgerät, wobei der Sicherheitsparameter basierend auf einer Kennung des zweiten Endgeräts erhalten wird, das die Funkressourcen-Verbindungsverwaltungssignalisierung erzeugt;
wobei das Empfangen eines von der netzwerkseitigen Vorrichtung zurückgegebenen Sicherheitsparameters durch das erste Endgerät basierend auf der Funkressourcen-Verbindungsverwaltungssignalisierung und Weiterleiten des Sicherheitsparameters an das zweite Endgerät Folgendes aufweist:
Empfangen einer von der netzwerkseitigen Vorrichtung zurückgegebenen Anforderung für einen sicheren Übertragungsmodus durch das erste Endgerät, wobei die Anforderung für einen sicheren Übertragungsmodus den Sicherheitsparameter enthält; und
Weiterleiten der Anforderung für einen sicheren Übertragungsmodus durch das erste Endgerät an das zweite Endgerät;
wobei das Verfahren **dadurch gekennzeichnet ist, dass**
das Weiterleiten der Anforderung für einen sicheren Übertragungsmodus durch das erste Endgerät an das zweite Endgerät Folgendes aufweist:
Wenn die Anforderung für einen sicheren Übertragungsmodus darüber hinaus die Kennung des zweiten Endgeräts enthält, Weiterleiten der Anforderung für einen sicheren Übertragungsmodus durch das erste Endgerät an das zweite Endgerät basierend auf der Kennung des zweiten Endgeräts, die in der Anforderung für einen sicheren Übertragungsmodus enthalten ist.

6. Verfahren nach Anspruch 5, wobei die Funkressourcen-Verbindungsverwaltungssignalisierung die Kennung des zweiten Endgeräts enthält.

7. Verfahren nach Anspruch 5 oder 6, wobei das Bestimmen durch ein erstes Endgerät, dass ein Ziel der Funkressourcen-Verbindungsverwaltungssignalisierung eines zweiten Endgeräts eine netzwerkseitige Vorrichtung ist, Folgendes aufweist:
wenn bestimmt wird, die von dem zweiten Endgerät gesendete Funkressourcen-Verbindungsverwaltungssignalisierung unter Verwendung einer dedizierten Luftschnittstellenressource zu empfangen, Bestimmen durch das erste Endgerät, dass das Ziel der Funkressourcen-Verbindungsverwaltungssignalisierung die netzwerkseitige Vorrichtung ist, wobei die dedizierte Luftschnittstellenressource dazu verwendet wird, das erste Endgerät anzuweisen, eine Signalisierung des zweiten Endgeräts an die netzwerkseitige Vorrichtung weiterzuleiten; oder
Bestimmen durch das erste Endgerät, dass die Funkressourcen-Verbindungsverwaltungssignalisierung Weiterleitungsanweisungsinformationen enthält, und Bestimmen, basierend auf den Weiterleitungsanweisungsinformationen, dass das Ziel der Funkressourcen-Verbindungsverwaltungssignalisierung die netzwerkseitige Vorrichtung ist, wobei die Weiterleitungsanweisungsinformationen dazu verwendet werden, anzuweisen, eine Signalisierung des zweiten Endgeräts an die netzwerkseitige Vorrichtung weiterzuleiten.

8. Verfahren nach einem der Ansprüche 5 bis 7, wobei das Senden der Funkressourcen-Verbindungsverwaltungssignalisierung an die netzwerkseitige Vorrichtung durch ein erstes Endgerät Folgendes aufweist:
Bestimmen einer Kennung eines dedizierten Funkträgers, der der Kennung des zweiten Endgeräts entspricht, das die Funkressourcen-Verbindungsverwaltungssignalisierung erzeugt, durch das erste Endgerät basierend auf einer Entsprechung zwischen einer Kennung eines zweiten Endgeräts und einer Kennung eines dedizierten Funkträgers und Senden der Funkressourcen-Verbindungsverwaltungssignalisierung an die netzwerkseitige Vorrichtung basierend auf der Kennung des dedizierten Funkträgers, wobei der dedizierte Funkträger ein Funkträger zwischen der netzwerkseitigen Vorrichtung und dem ersten Endgerät ist; oder
Senden der Funkressourcen-Verbindungsverwaltungssignalisierung durch das erste Endgerät an die netzwerkseitige Vorrichtung nach dem Hinzufügen von Signalisierungsquellen-Anzeigeinformationen zu der Funkressourcen-Verbindungsverwaltungssignalisierung, wobei die Signalisierungsquellen-Anzeigeinformationen zum Anzeigen verwendet werden, dass die Funkressourcen-Verbindungsverwaltungssignalisierung durch das zweite Endgerät erzeugt wird.

9. Netzwerkseitige Vorrichtung, die Folgendes aufweist:
ein Empfangsmodul (1201), ausgebildet zum Empfangen einer von einem ersten Endgerät gesendeten Funkressourcen-Verbindungsverwaltungssignalisierung, wobei das erste Endgerät eine Relaisfunktion hat und die Funkressourcen-Verbindungsverwaltungssignalisierung von einem zweiten Endgerät an das erste Endgerät gesendet wird;
ein Verarbeitungsmodul (1202), ausgebildet zum: Bestimmen einer Kennung des zweiten Endgeräts, das die vom Empfangsmodul empfangene Funkressourcen-Verbindungsverwaltungssignalisierung erzeugt, und Erhalten eines Sicherheitsparameters, der der Kennung des zweiten Endgeräts entspricht; und
ein Sendemodul (1203), ausgebildet zum Senden des erhaltenen Sicherheitsparameters an das zweite Endgerät unter Verwendung des ersten Endgeräts;
wobei das Verarbeitungsmodul speziell ausgebildet ist zum:
Erzeugen einer Anforderung für einen sicheren Übertragungsmodus, wobei die Anforderung für einen sicheren Übertragungsmodus den Sicherheitsparameter enthält; und
das Sendemodul speziell ausgebildet ist zum:
Senden der durch das Verarbeitungsmodul erzeugten Anforderung für einen sicheren Übertragungsmodus an das erste Endgerät, damit das erste Endgerät die Anforderung für einen sicheren Übertragungsmodus an das zweite Endgerät weiterleitet;
wobei die netzwerkseitige Vorrichtung **dadurch gekennzeichnet ist, dass** die Anforderung für einen sicheren Übertragungsmodus darüber hinaus die Kennung des zweiten Endgeräts enthält, damit
das erst Endgerät die Anforderung für einen sicheren Übertragungsmodus basierend auf der Kennung des zweiten Endgeräts, die in der Anforderung für einen sicheren Übertragungsmodus enthalten ist, an das zweite Endgerät weiterleitet.

10. Netzwerkseitige Vorrichtung nach Anspruch 9, wobei die Funkressourcen-Verbindungsverwaltungssignalisierung die Kennung des zweiten Endgeräts enthält.

11. Netzwerkseitige Vorrichtung nach Anspruch 9, wobei das Verarbeitungsmodul speziell ausgebildet ist zum:
Bestimmen einer Kennung eines dedizierten Funkträgers zum Übertragen der Funkressourcen-Verbindungsverwaltungssignalisierung und Bestimmen, basierend auf einer Entsprechung zwischen einer Kennung eines dedizierten Funkträgers und einer Kennung eines zweiten Endgeräts, dass eine Kennung eines zweiten Endgeräts, die der Kennung des dedizierten Funkträgers zum Übertragen der Funkressourcen-Verbindungsverwaltungssignalisierung entspricht, die Kennung des zweiten Endgeräts ist, das die Funkressourcen-Verbindungsverwaltungssignalisierung erzeugt, wobei der dedizierte Funkträger ein Funkträger zwischen der netzwerkseitigen Vorrichtung und dem ersten Endgerät ist; oder
Erhalten von Signalisierungsquellen-Anzeigeinformationen, die in der Funkressourcen-Verbindungsverwaltungssignalisierung enthalten sind, Bestimmen, basierend auf den Signalisierungsquellen-Anzeigeinformationen, dass die Funkressourcen-Verbindungsverwaltungssignalisierung durch das zweite Endgerät erzeugt wird, und Bestimmen der Kennung des zweiten Endgeräts basierend auf der Funkressourcen-Verbindungsverwaltungssignalisierung, wobei die Signalisierungsquellen-Anzeigeinformationen verwendet werden, um anzuzeigen, dass die Funkressourcen-Verbindungsverwaltungssignalisierung durch das zweite Endgerät erzeugt wird.

12. Endgerät, wobei das Endgerät ein erstes Endgerät mit einer Relaisfunktion ist und Folgendes aufweist:
ein erstes Verarbeitungsmodul (1401), ausgebildet zum: Anweisen eines Sendemoduls zum Senden der Funkressourcen-Verbindungsverwaltungssignalisierung an die netzwerkseitige Vorrichtung, nachdem bestimmt wurde, dass ein Ziel der Funkressourcen-Verbindungsverwaltungssignalisierung eines zweiten Endgeräts eine netzwerkseitige Vorrichtung ist; und
ein zweites Verarbeitungsmodul (1403), ausgebildet zum:
Empfangen eines von der netzwerkseitigen Vorrichtung zurückgegebenen Sicherheitsparameters unter Verwendung eines Empfangsmoduls basierend auf der Funkressourcen-Verbindungsverwaltungssignalisierung und Anweisen des Sendemoduls zum Weiterleiten des Sicherheitsparameters an das zweite Endgerät, wobei der Sicherheitsparameter basierend auf einer Kennung des zweiten Endgeräts erhalten wird, das die Funkressourcen-Verbindungsverwaltungssignalisierung erzeugt;
wobei das zweite Verarbeitungsmodul speziell ausgebildet ist zum:
Empfangen einer von der netzwerkseitigen Vorrichtung zurückgegebenen Anforderung für einen sicheren Übertragungsmodus unter Verwendung des Empfangsmoduls, wobei die Anforderung für einen sicheren Übertragungsmodus den Sicherheitsparameter enthält; und
Anweisen des Sendemoduls zum Weiterleiten der Anforderung für einen sicheren Übertragungsmodus an das zweite Endgerät;
wobei das Endgerät **dadurch gekennzeichnet ist, dass** das zweite Verarbeitungsmodul speziell ausgebildet ist zum:
Weiterleiten der Anforderung für einen sicheren Übertragungsmodus unter Verwendung des Sendemoduls an das zweite Endgerät basierend auf der Kennung des zweiten Endgeräts, die in der Anforderung für einen sicheren Übertragungsmodus enthalten ist, wenn die Anforderung für einen sicheren Übertragungsmodus darüber hinaus die Kennung des zweiten Endgeräts enthält.

13. Endgerät nach Anspruch 12, wobei die Funkressourcen-Verbindungsverwaltungssignalisierung die Kennung des zweiten Endgeräts enthält.

14. Endgeräts nach Anspruch 12 oder 13, wobei das erste Empfangsmodul speziell ausgebildet ist zum:
Bestimmen, dass das Ziel der Funkressourcen-Verbindungsverwaltungssignalisierung die netzwerkseitige Vorrichtung ist, wenn bestimmt wird, dass das Empfangsmodul die von dem zweiten Endgerät gesendete Funkressourcen-Verbindungsverwaltungssignalisierung unter Verwendung einer dedizierten Luftschnittstellenressource empfängt, wobei die dedizierte Luftschnittstellenressource dazu verwendet wird, das erste Endgerät anzuweisen, eine Signalisierung des zweiten Endgeräts an die netzwerkseitige Vorrichtung weiterzuleiten; oder
Bestimmen, dass die Funkressourcen-Verbindungsverwaltungssignalisierung Weiterleitungsanweisungsinformationen enthält, und Bestimmen, basierend auf den Weiterleitungsanweisungsinformationen, dass das Ziel der Funkressourcen-Verbindungsverwaltungssignalisierung die netzwerkseitige Vorrichtung ist, wobei die Weiterleitungsanweisungsinformationen dazu verwendet werden, anzuweisen, eine Signalisierung des zweiten Endgeräts an die netzwerkseitige Vorrichtung weiterzuleiten.

## Revendications

1. Procédé de transmission de paramètres de sécurité, consistant à :
recevoir (803), par un dispositif côté réseau, une signalisation de gestion de connexion de ressources radio envoyée par un premier dispositif terminal, le premier dispositif terminal ayant une fonction de relais, et la signalisation de gestion de connexion de ressources radio étant envoyée par un second dispositif terminal au premier dispositif terminal ;
déterminer (804), par le dispositif côté réseau, un identifiant du second dispositif terminal qui génère la signalisation de gestion de connexion de ressources radio, et obtenir un paramètre de sécurité correspondant à l'identifiant du second dispositif terminal ; et
envoyer (805), par le dispositif côté réseau, le paramètre de sécurité obtenu au second dispositif terminal au moyen du premier dispositif terminal ;
l'envoi, par le dispositif côté réseau, du paramètre de sécurité obtenu au second dispositif terminal au moyen du premier dispositif terminal, consistant à :
générer, par le dispositif côté réseau, une demande de mode de transmission sécurisé, la demande de mode de transmission sécurisé transportant le paramètre de sécurité ; et
envoyer, par le dispositif côté réseau, la demande de mode de transmission sécurisé au premier dispositif terminal, de sorte que le premier dispositif terminal transfère la demande de mode de transmission sécurisé au second dispositif terminal ;
le procédé étant **caractérisé en ce que** :
la demande de mode de transmission sécurisé transporte en outre l'identifiant du second dispositif terminal, de sorte que le premier dispositif terminal transfère la demande de mode de transmission sécurisé au second dispositif terminal sur la base de l'identifiant du second dispositif terminal transporté dans la demande de mode de transmission sécurisé.

2. Procédé selon la revendication 1, dans lequel la signalisation de gestion de connexion de ressources radio transporte l'identifiant du second dispositif terminal.

3. Procédé selon la revendication 1, dans lequel la détermination, par le dispositif côté réseau, d'un identifiant du second dispositif terminal qui génère la signalisation de gestion de connexion de ressources radio, consiste à :
déterminer, par le dispositif côté réseau, un identifiant d'une porteuse radio dédiée pour transmettre la signalisation de gestion de connexion de ressources radio, et déterminer, sur la base d'une correspondance entre un identifiant d'une porteuse radio dédiée et un identifiant d'un second dispositif terminal, qu'un identifiant d'un second dispositif terminal correspondant à l'identifiant de la porteuse radio dédiée pour transmettre la signalisation de gestion de connexion de ressources radio est l'identifiant du second dispositif terminal qui génère la signalisation de gestion de connexion de ressources radio, la porteuse radio dédiée étant une porteuse radio entre le dispositif côté réseau et le premier dispositif terminal ; ou
obtenir, par le dispositif côté réseau, une information d'indication de source de signalisation transportée dans la signalisation de gestion de connexion de ressources radio, déterminer, sur la base de l'information d'indication de source de signalisation, que la signalisation de gestion de connexion de ressources radio est générée par le second dispositif terminal, et déterminer l'identifiant du second dispositif terminal sur la base de la signalisation de gestion de connexion de ressources radio, l'information d'indication de source de signalisation étant utilisée pour indiquer que la signalisation de gestion de connexion de ressources radio est générée par le second dispositif terminal.

4. Procédé selon la revendication 3, le procédé consistant en outre, avant la réception, par un dispositif côté réseau, d'une signalisation de gestion de connexion de ressources radio envoyée par un premier dispositif terminal, à :
envoyer, par le dispositif côté réseau, une signalisation de configuration de porteuse radio au premier dispositif terminal, la signalisation de configuration de porteuse radio comprenant au moins l'identifiant de la porteuse radio dédiée qui doit être configurée pour transmettre la signalisation de gestion de connexion de ressources radio du second dispositif terminal ; et
recevoir, par le dispositif côté réseau, une signalisation de fin de configuration de porteuse radio renvoyée par le premier dispositif terminal, la signalisation de fin de configuration de porteuse radio étant utilisée pour indiquer qu'une configuration de la porteuse radio dédiée pour transmettre la signalisation de gestion de connexion de ressources radio du second dispositif terminal est finie.

5. Procédé de transmission de paramètres de sécurité, consistant à :
déterminer (802), par un premier dispositif terminal, qu'une destination d'une signalisation de gestion de connexion de ressources radio d'un second dispositif terminal est un dispositif côté réseau, puis envoyer la signalisation de gestion de connexion de ressources radio au dispositif côté réseau, le premier dispositif terminal ayant une fonction de relais ; et
recevoir (806), par le premier dispositif terminal, un paramètre de sécurité renvoyé par le dispositif côté réseau sur la base de la signalisation de gestion de connexion de ressources radio, et transférer le paramètre de sécurité au second dispositif terminal, le paramètre de sécurité étant obtenu sur la base d'un identifiant du second dispositif terminal qui génère la signalisation de gestion de connexion de ressources radio,
la réception, par le premier dispositif terminal, d'un paramètre de sécurité renvoyé par le dispositif côté réseau sur la base de la signalisation de gestion de connexion de ressources radio, et le transfert du paramètre de sécurité au second dispositif terminal, consistant à :
recevoir, par le premier dispositif terminal, une demande de mode de transmission sécurisé renvoyée par le dispositif côté réseau, la demande de mode de transmission sécurisé transportant le paramètre de sécurité ; et
transférer, par le premier dispositif terminal, la demande de mode de transmission sécurisé au second dispositif terminal ;
le procédé étant **caractérisé en ce que** :
le transfert, par le premier dispositif terminal, de la demande de mode de transmission sécurisé au second dispositif terminal, consistant à :
si la demande de mode de transmission sécurisé transporte en outre l'identifiant du second dispositif terminal, transférer, par le premier dispositif terminal, la demande de mode de transmission sécurisé au second dispositif terminal sur la base de l'identifiant du second dispositif terminal transporté dans la demande de mode de transmission sécurisé.

6. Procédé selon la revendication 5, dans lequel la signalisation de gestion de connexion de ressources radio transporte l'identifiant du second dispositif terminal.

7. Procédé selon la revendication 5 ou 6, dans lequel la détermination, par un premier dispositif terminal, du fait qu'une destination d'une signalisation de gestion de connexion de ressources radio d'un second dispositif terminal est un dispositif côté réseau, consiste à :
s'il est déterminé qu'il faut recevoir, au moyen d'une ressource d'interface radio dédiée, la signalisation de gestion de connexion de ressources radio envoyée par le second dispositif terminal, déterminer, par le premier dispositif terminal, que la destination de la signalisation de gestion de connexion de ressources radio est le dispositif côté réseau, la ressource d'interface radio dédiée étant utilisée pour donner l'instruction au premier dispositif terminal de transférer la signalisation du second dispositif terminal au dispositif côté réseau ; ou
déterminer, par le premier dispositif terminal, que la signalisation de gestion de connexion de ressources radio transporte une information d'instruction de transfert, et déterminer, sur la base de l'information d'instruction de transfert, que la destination de la signalisation de gestion de connexion de ressources radio est le dispositif côté réseau, l'information d'instruction de transfert étant utilisée pour donner l'instruction de transférer la signalisation du second dispositif terminal au dispositif côté réseau.

8. Procédé selon l'une quelconque des revendications 5 à 7, dans lequel l'envoi, par un premier dispositif terminal, de la signalisation de gestion de connexion de ressources radio au dispositif côté réseau, consiste à :
déterminer, par le premier dispositif terminal sur la base d'une correspondance entre un identifiant d'un second dispositif terminal et un identifiant d'une porteuse radio dédiée, un identifiant d'une porteuse radio dédiée correspondant à l'identifiant du second dispositif terminal qui génère la signalisation de gestion de connexion de ressources radio, et envoyer la signalisation de gestion de connexion de ressources radio au dispositif côté réseau sur la base de l'identifiant de la porteuse radio dédiée, la porteuse radio dédiée étant une porteuse radio entre le dispositif côté réseau et le premier dispositif terminal ; ou
envoyer, par le premier dispositif terminal, la signalisation de gestion de connexion de ressources radio au dispositif côté réseau après l'ajout d'une information d'indication de source de signalisation à la signalisation de gestion de connexion de ressources radio, l'information d'indication de source de signalisation étant utilisée pour indiquer que la signalisation de gestion de connexion de ressources radio est générée par le second dispositif terminal.

9. Dispositif côté réseau, comprenant :
un module de réception (1201), configuré pour recevoir une signalisation de gestion de connexion de ressources radio envoyée par un premier dispositif terminal, le premier dispositif terminal ayant une fonction de relais, et la signalisation de gestion de connexion de ressources radio étant envoyée par un second dispositif terminal au premier dispositif terminal ;
un module de traitement (1202), configuré pour : déterminer un identifiant du second dispositif terminal qui génère la signalisation de gestion de connexion de ressources radio reçue par le module de réception, et obtenir un paramètre de sécurité correspondant à l'identifiant du second dispositif terminal ; et
un module d'envoi (1203), configuré pour envoyer le paramètre de sécurité obtenu au second dispositif terminal au moyen du premier dispositif terminal ;
le module de traitement étant spécifiquement configuré pour :
générer une demande de mode de transmission sécurisé, la demande de mode de transmission sécurisé transportant le paramètre de sécurité ; et
le module d'envoi étant spécifiquement configuré pour :
envoyer au premier dispositif terminal la demande de mode de transmission sécurisé générée par le module de traitement, de sorte que le premier dispositif terminal transfère la demande de mode de transmission sécurisé au second dispositif terminal ;
le dispositif côté réseau étant **caractérisé en ce que** :
la demande de mode de transmission sécurisé transporte en outre l'identifiant du second dispositif terminal, de sorte que le premier dispositif terminal transfère la demande de mode de transmission sécurisé au second dispositif terminal sur la base de l'identifiant du second dispositif terminal transporté dans la demande de mode de transmission sécurisé.

10. Dispositif côté réseau selon la revendication 9, dans lequel la signalisation de gestion de connexion de ressources radio transporte l'identifiant du second dispositif terminal.

11. Dispositif côté réseau selon la revendication 9, dans lequel le module de traitement est spécifiquement configuré pour :
déterminer un identifiant d'une porteuse radio dédiée pour transmettre la signalisation de gestion de connexion de ressources radio, et déterminer, sur la base d'une correspondance entre un identifiant d'une porteuse radio dédiée et un identifiant d'un second dispositif terminal, qu'un identifiant d'un second dispositif terminal correspondant à l'identifiant de la porteuse radio dédiée pour transmettre la signalisation de gestion de connexion de ressources radio est l'identifiant du second dispositif terminal qui génère la signalisation de gestion de connexion de ressources radio, la porteuse radio dédiée étant une porteuse radio entre le dispositif côté réseau et le premier dispositif terminal ; ou
obtenir une information d'indication de source de signalisation transportée dans la signalisation de gestion de connexion de ressources radio, déterminer, sur la base de l'information d'indication de source de signalisation, que la signalisation de gestion de connexion de ressources radio est générée par le second dispositif terminal, et déterminer l'identifiant du second dispositif terminal sur la base de la signalisation de gestion de connexion de ressources radio, l'information d'indication de source de signalisation étant utilisée pour indiquer que la signalisation de gestion de connexion de ressources radio est générée par le second dispositif terminal.

12. Dispositif terminal, le dispositif terminal étant un premier dispositif terminal avec une fonction de relais et comprenant :
un premier module de traitement (1401), configuré pour : après la détermination du fait qu'une destination d'une signalisation de gestion de connexion de ressources radio d'un second dispositif terminal est un dispositif côté réseau, donner l'instruction à un module d'envoi d'envoyer la signalisation de gestion de connexion de ressources radio au dispositif côté réseau ; et
un second module de traitement (1403), configuré pour : recevoir, au moyen d'un module de réception, un paramètre de sécurité renvoyé par le dispositif côté réseau sur la base de la signalisation de gestion de connexion de ressources radio, et donner l'instruction au module d'envoi de transférer le paramètre de sécurité au second dispositif terminal, le paramètre de sécurité étant obtenu sur la base d'un identifiant du second dispositif terminal qui génère la signalisation de gestion de connexion de ressources radio ;
le second module de traitement étant spécifiquement configuré pour :
recevoir, au moyen du module de réception, une demande de mode de transmission sécurisé renvoyée par le dispositif côté réseau, la demande de mode de transmission sécurisé transportant le paramètre de sécurité ; et
donner l'instruction au module d'envoi de transférer la demande de mode de transmission sécurisé au second dispositif terminal ;
le dispositif terminal étant **caractérisé en ce que** :
le second module de traitement est spécifiquement configuré pour :
si la demande de mode de transmission sécurisé transporte en outre l'identifiant du second dispositif terminal, transférer, au moyen du module d'envoi, la demande de mode de transmission sécurisé au second dispositif terminal sur la base de l'identifiant du second dispositif terminal transporté dans la demande de mode de transmission sécurisé.

13. Dispositif terminal selon la revendication 12, dans lequel la signalisation de gestion de connexion de ressources radio transporte l'identifiant du second dispositif terminal.

14. Dispositif terminal selon la revendication 12 ou 13, dans lequel le premier module de traitement est spécifiquement configuré pour :
s'il est déterminé que le module de réception reçoit, au moyen d'une ressource d'interface radio dédiée, la signalisation de gestion de connexion de ressources radio envoyée par le second dispositif terminal, déterminer que la destination de la signalisation de gestion de connexion de ressources radio est le dispositif côté réseau, la ressource d'interface radio dédiée étant utilisée pour donner l'instruction au premier dispositif terminal de transférer la signalisation du second dispositif terminal au dispositif côté réseau ; ou
déterminer que la signalisation de gestion de connexion de ressources radio transporte une information d'instruction de transfert, et déterminer, sur la base de l'information d'instruction de transfert, que la destination de la signalisation de gestion de connexion de ressources radio est le dispositif côté réseau, l'information d'instruction de transfert étant utilisée pour donner l'instruction de transférer la signalisation du second dispositif terminal au dispositif côté réseau.
